# EUROPEAN PATENT SPECIFICATION

(11) **EP 1 916 136 B1**
(45) Date of publication and mention of the grant of the patent: **16.03.2011**
(21) Application number: 07121100.7
(22) Date of filing: 24.01.2001
(51) Int. Cl.: B60J 7/00

(54) **Open roof construction for a vehicle, as well as a sun screen for use therein**
Offene Dachkonstruktion für ein Fahrzeug sowie Sonnenschirm zur Verwendung darin
Construction de toit ouvert pour véhicule, ainsi qu'un écran solaire pour l'utiliser

(30) Priority: 24.01.2000 NL 1014154
(43) Date of publication of application: 30.04.2008
(62) Divisional of application: 01200260.6
(73) Proprietor: Inalfa Roof Systems Group B.V., 5804 AH Venray (NL)
(72) Inventor: Manders, Peter Christiaan Leonardus Johannes, 5961 SM Horst (NL); Boersma, Egbert, 5708 CR Helmond (NL)
(74) Representative: Metman, Karel Johannes

(56) References cited:
- DE-A1- 3 930 054
- DE-C1- 4 329 285
- DE-C1- 19 810 505

## Description

The present invention relates to an open roof construction for a vehicle.

Open roof constructions of this kind are known in several versions thereof. Examples are to be found in DE-A-29 23 888, US-A-4, 717, 200, DE-C-195 11 067, DE-C-195 19 811, DE-C-198 10 505 and DE-A-198 21 358.

The object of the invention is to provide a new open roof construction of the kind referred to in the introduction.

In order to accomplish that objective, the open roof construction according to the invention comprises the features defined in claim 1.

The invention provides a screen which does pass air, and consequently provides ventilation, but which allows hardly any incidence of light, if at all, at least no direct incidence of light. Preferably, the overlapping parts of the screen are formed in such a manner that a shaded edge is formed on the underside of the screen in use, at the location of said overlapping parts, rather than patches of light, as is the case with the prior art where the overlapping parts are discontinuous or interrupted.

The overlapping parts can be formed by making the screen double-walled, with an upper part and a lower part, and by giving said parts different dimensions and having them overlap at least partially. The overlapping parts form a ventilating gap which is covered from the upper side, which ventilating gap extends in the longitudinal direction of the screen or transversely thereto. According to another possibility, the ventilating gap extends along the entire circumference of the screen. The ventilating openings may adjoin said gap between the upper part and the lower part in that case, they may for example be disposed near the front edge and the rear edge of the screen. The ventilating openings may be formed of separate parts formed of plastic material, for example by means of an injection moulding process, which parts may have been attached to the screen by means of a snap connection, for example, but it is also possible to form larger parts of the screen of preformed material.

The invention will now be explained in more detail with reference to the drawings, which show, in some case very schematically, a number of exemplary embodiments of the invention.
Fig. 1 is a very schematic top plan view of a vehicle roof fitted with an exemplary, not claimed, embodiment of the open roof construction according to the invention.
Fig. 2 is a perspective, longitudinal sectional view of the sun screen of the open roof construction of Fig. 1, seen from above.
Fig. 3 shows half the screen of Fig. 2, seen in bottom plan view in this case.
Fig. 4 is a sectional view along line IV-IV in Fig. 2.
Fig. 5 is a bottom plan view of a variant of an embodiment of the sun screen according to the invention.
Fig. 6 is a very schematic sectional view along line VI-VI in Fig. 5.
Fig. 7 is a perspective, larger-scale view of a part of the underside of the screen that is shown in Figs. 5 and 6.
Figs. 8 and 9 are a cross-sectional view and a perspective view of details of the side edge of the sun screen of Figs. 6 and 7.
Figs. 10 and 11 are a bottom plan view and a perspective view of another exemplary embodiment of the sun screen according to the invention.
Figs. 12 and 13 are a bottom plan view and a very schematic sectional view of another variant of an embodiment of the sun screen according to the invention, whereas Fig. 14 is a perspective view of a detail thereof.
Figs. 15, 16 and 17 show various elevational views and sectional views, respectively, of another variant of an embodiment, and Figs. 18, 19 and 20 show a final exemplary embodiment of the sun screen according to the invention.

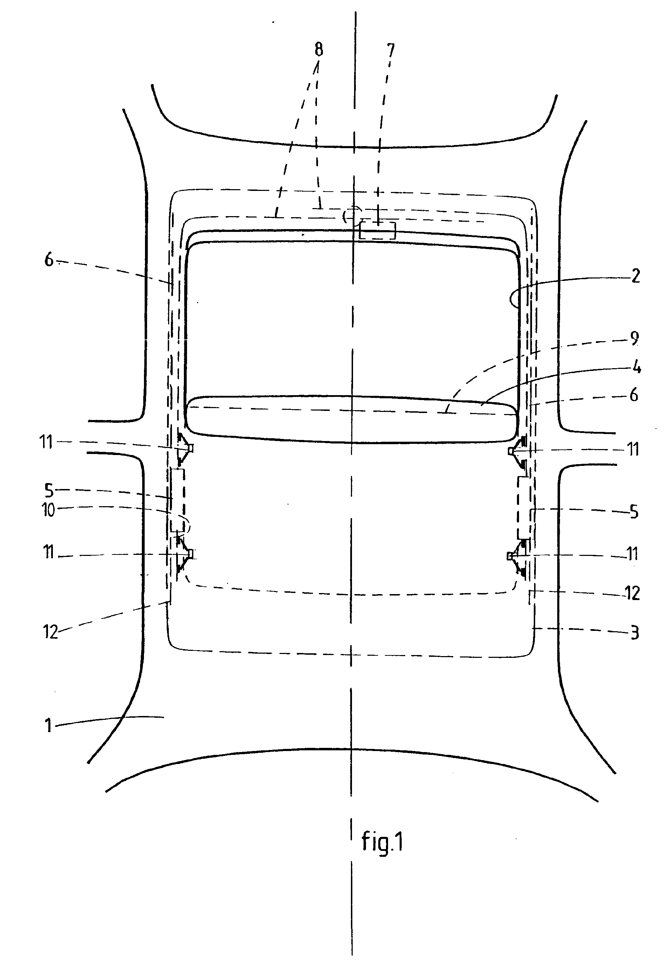

Fig. 1 shows the fixed roof of a motor vehicle, in this case a passenger car. Said fixed roof 1 is provided with an at least substantially rectangular roof opening 2 for the purpose of mounting an open roof construction therein. The open roof construction comprises a stationary part, in this case a frame 3, which is fixed to the underside of the fixed roof 1 of the vehicle.

In the illustrated embodiment the open roof construction is a so-called sliding roof or sliding-tilt roof, which comprises a panel 4 which is preferably transparent and which is more or less rigid in this embodiment, which panel is capable of selectively closing the roof opening 2 or releasing it to a greater or lesser extent. To this end, panel 4 is laterally supported by operating mechanisms 5, which are slidably accommodated in guide rails 6 which are mounted on frame 3 or which form part thereof, and which extend in longitudinal direction, parallel to each other, on either side of roof opening 2 and rearwards thereof. Said operating mechanisms 5 can be moved synchronously in guide rails 6 and thus move the panel not only in longitudinal direction but also in vertical direction. To this end the operating mechanisms 5 are actuated from a driving device 7, such as an electric motor, for example via pull-push cables 8.

Besides panel 4, the open roof construction also comprises a lower closure element, in this case in the form of a sun screen 9, which is slidably guided with its side edges relative to guideways 10 of guide rails 6. Sun screen 9 can be moved forward and rearward, for example manually or automatically, or be moved along with panel 4. Sun screen 9 is fitted with a number of sliding shoes 11, four sliding shoes 11 on each side edge of the sun screen in this embodiment, in order to enable sliding movement of sun screen 9 in guide grooves 10.

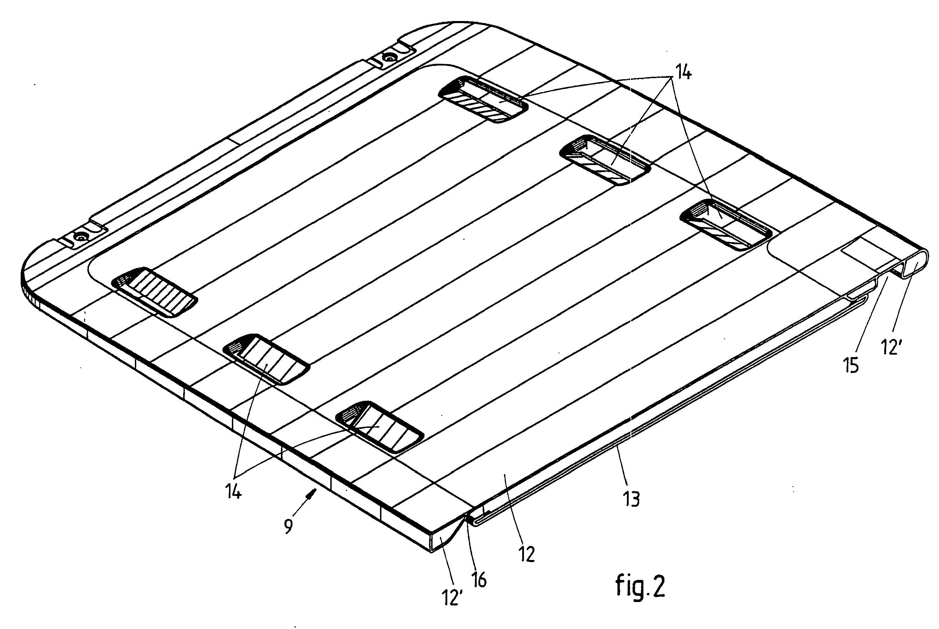

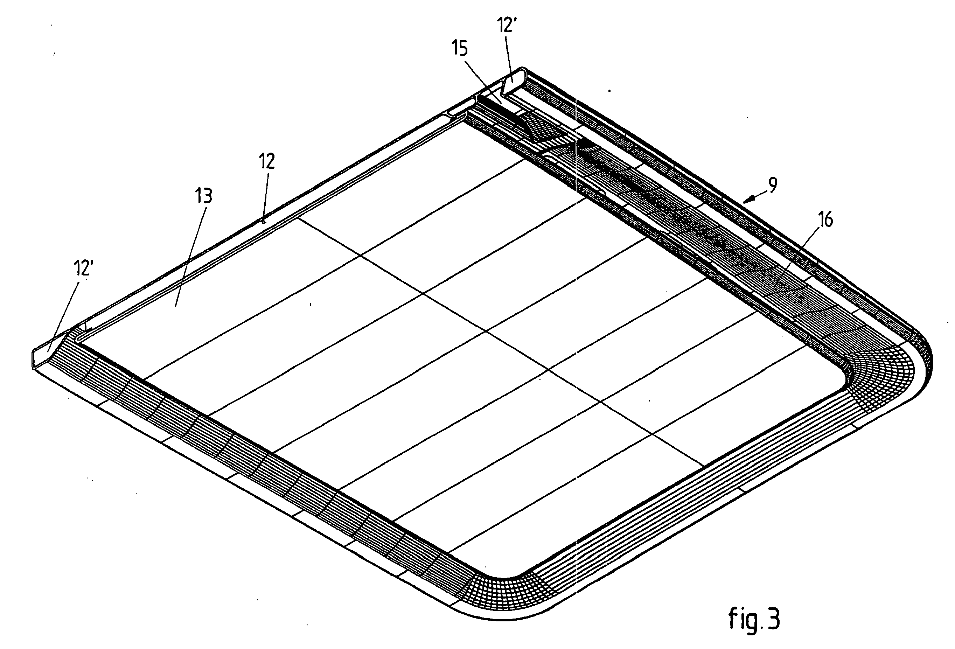

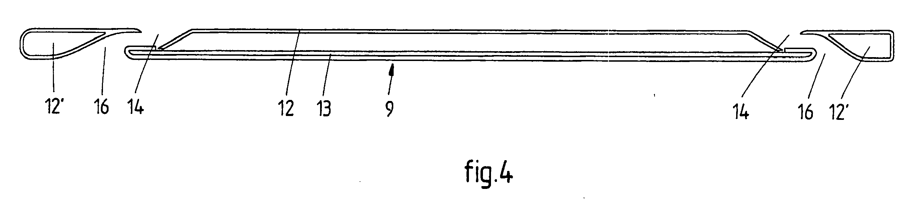

Figs. 2 - 4 show the sun screen 9 in detail. The figures show that the sun screen is double-walled, comprising an upper part 12 and a lower part 13. Upper part 12 is larger than lower part 13, and thus defines the circumference of the sun screen 9. The circumferential edge 12' of upper part 12 is hollow, and it has a thickness such that the bottom side of circumferential edge 12' of upper part 12 is substantially flush with the bottom side of lower part 13. The upper side of upper part 12 is substantially flat and free from any projections. Lower part 13, over which cloth may be stretched, is connected to upper part 12 in a manner not shown, leaving clear a space between the two parts, which is formed as a result of the upper part curving and blending upwards above lower part 13, thus leaving clear a ventilating gap 16 therebetween. Ventilating openings 14 are formed in the upper part 12 of the sun screen 9, near the front edge and the rear edge of sun screen in this case, which ventilating openings open at the bottom side of upper part 12 at a location where lower part 13 overlaps upper part 12. Thus, said ventilating openings 14 are hidden from view to the occupants of the vehicle. The only thing that can be seen is the shaded edge at the circumference of part 13. In this way direct incidence of light into the interior is prevented in the closed position of the sun screen, whereas ventilating through the sun screen 9 is still possible.

The figures furthermore show that a handgrip 15 for manual operation of sun screen 9 is formed in the bottom side of the upper part 12 of sun screen 9, at the front edge thereof. Said handgrip 15 is formed separately from the ventilating openings 14.

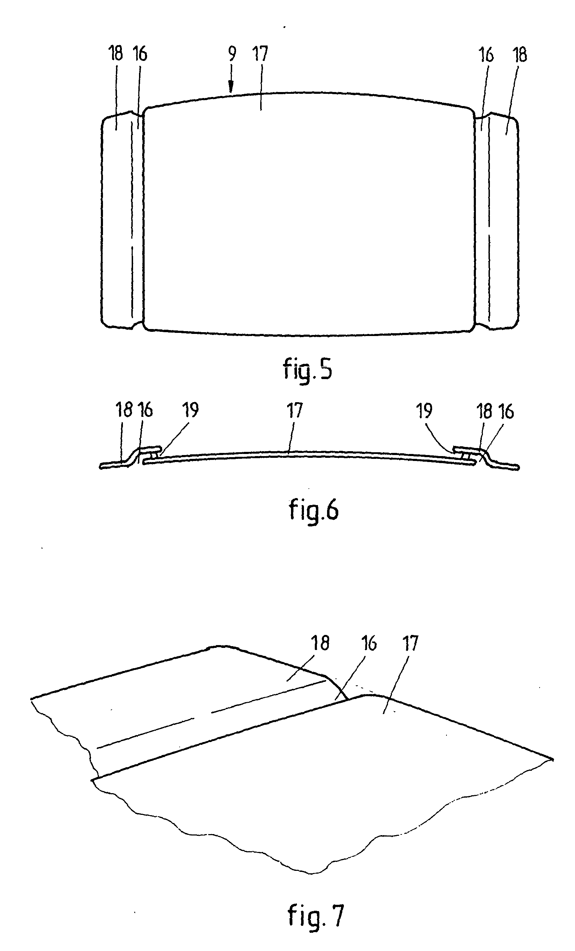

Figs. 5 - 20 shows all kinds of variants of embodiments of the open roof construction according to the invention, and in particular of the sun screen thereof.

Figs. 5 - 7 show a first variant, wherein the ventilating gap 16 does not extend along the entire circumference of sun screen 9, but only along the side edges thereof. In this very schematic exemplary embodiment, sun screen 9 consists of a central part 17 and two edge parts 18, which slightly overlap said central part 17 on the upper side and wherein the overlapping parts of said central part 17 hide the ventilating openings 19 to be formed from view.

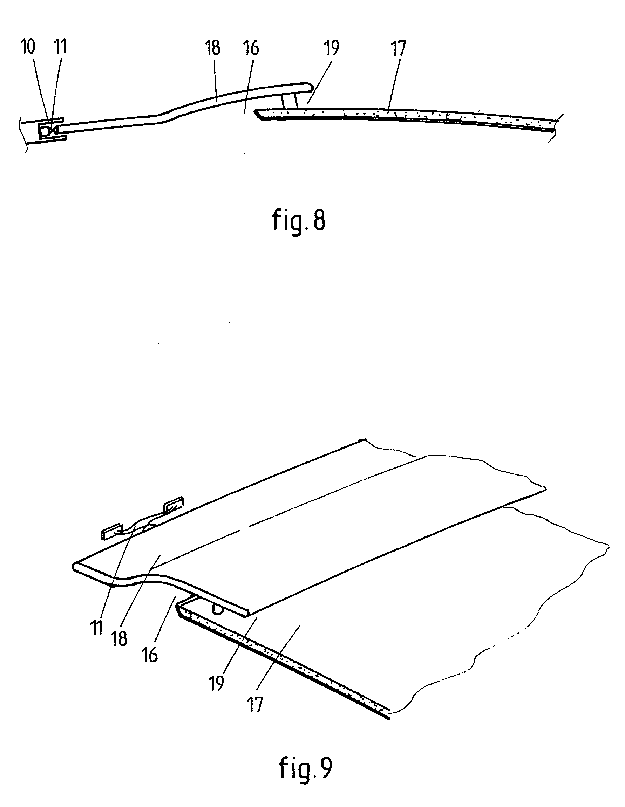

Figs. 8 and 9 are schematic, larger-scale views of an edge part 18, which is fitted with sliding shoes 11, which sliding shoes are thus capable of guiding the movement of sun screen 9 along guideway 10.

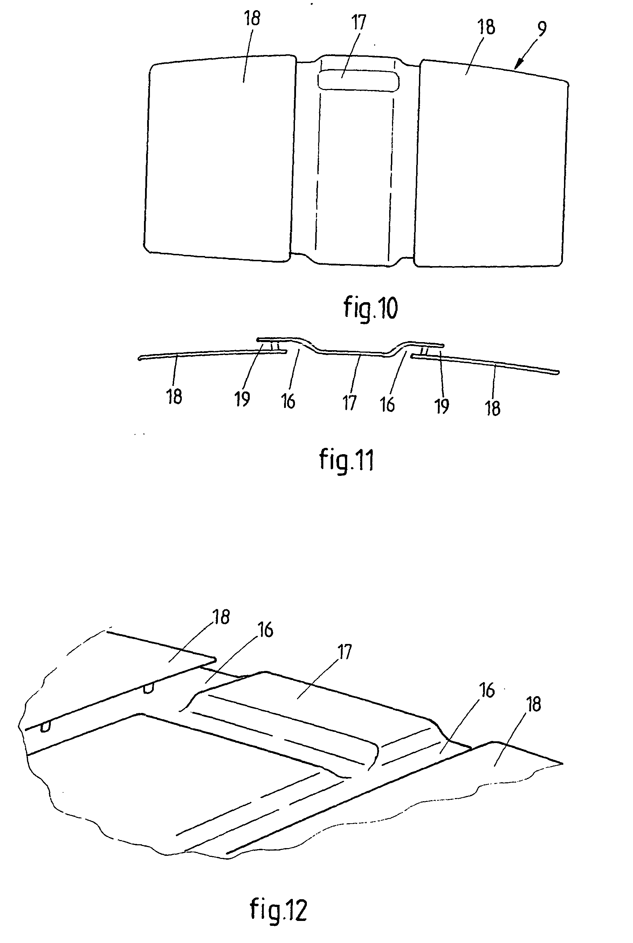

Figs. 10, 11 and 12 show a variant wherein the edge parts 18 are wider, and wherein the central part 17 overlaps the edge parts 18 on the upper side, so that the shaded edges are formed near the central part 17. In this way a central console as present in the roof liner of many automobiles is still formed in the sun screen 9, as it were.

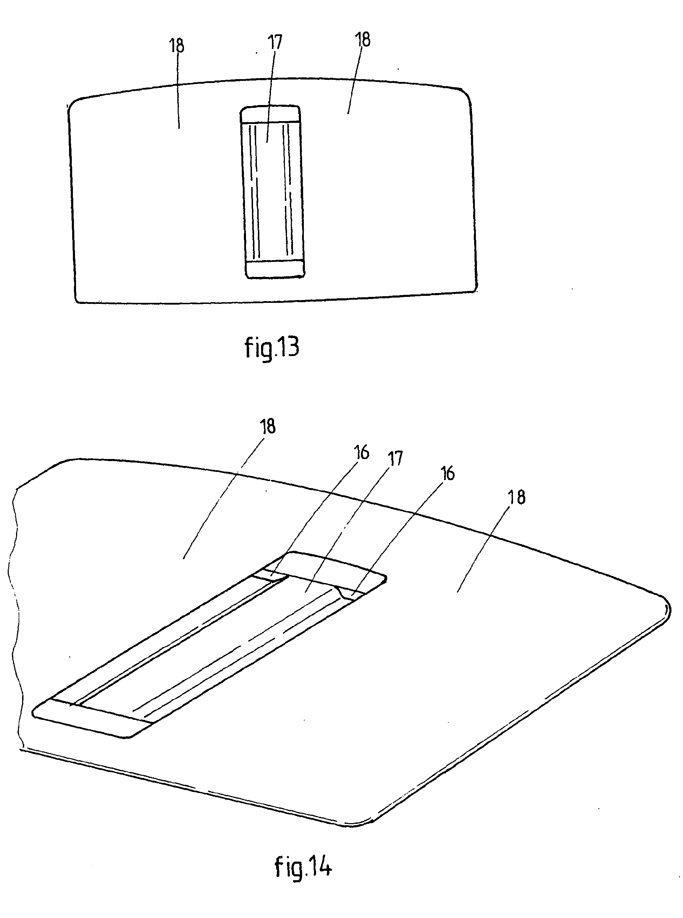

Figs. 13 and 14 show a variant of the preceding embodiment, wherein the two edge parts 18 are interconnected at the front and the rear edge of the sun screen 9, and wherein consequently the ventilating gaps 16 do not extend along the entire length of sun screen 9. In this way a central console is still formed, as it were, but the rigidity of the sun screen 9 as a whole is greater in this case.

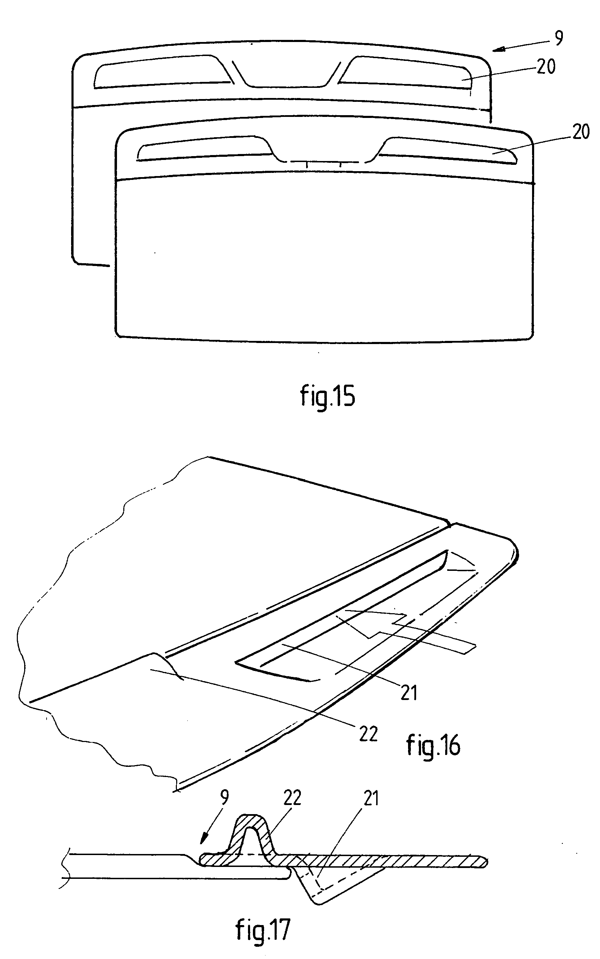

Figs. 15, 16 and 17 show another embodiment of the sun screen according to the invention, wherein a front part 20 of sun screen 9 has been formed of plastic material as a separate part, preferably by means of an injection moulding process. Thus, in those places that are most critical as regards dirt and grease, viz. the front edge of the sun screen, the ventilating openings 21 and the handgrip 22 consist of plastic material, and consequently they are easier to clean. The other parts of the sun screen 9 may be lined with textile, for example, and be adapted to the material of the roof liner of the vehicle in question.

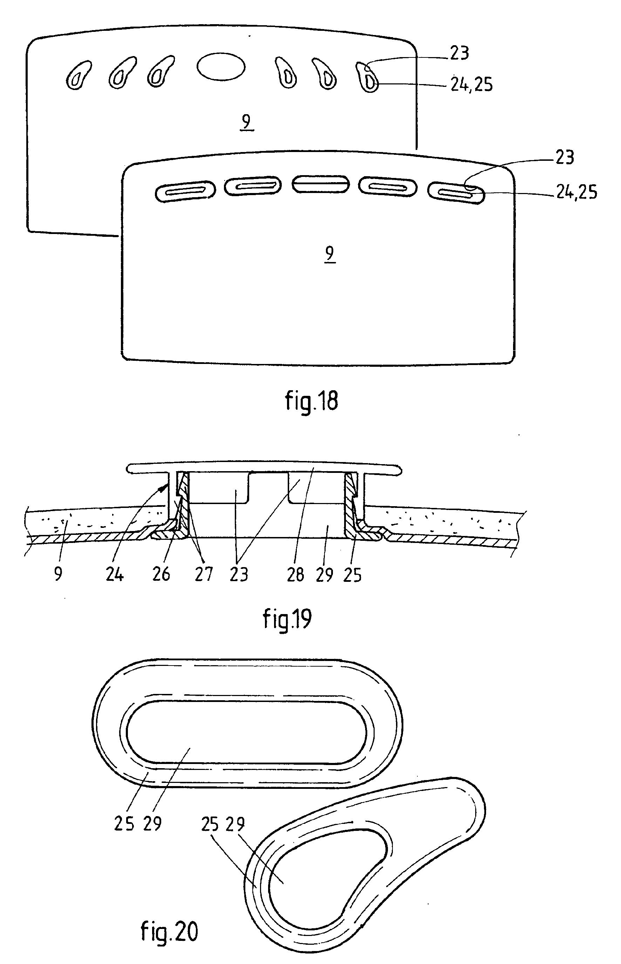

Figs. 18 - 20 show a final exemplary embodiment, wherein the ventilating openings 23 are formed in separate elements, which have been made of plastic material, preferably by means of an injection moulding process. Said elements consist of an upper element 24 and a lower element 25. Lower element 25 can be inserted from below through a suitable opening 26 in sun screen 9, after which the upper element 24 can be connected to lower element 26 by snap means 27 and be attached to sun screen 9. Upper element 24 has a wall 28, which covers the passage 29 through lower element 25, so that there will be no direct incidence of light through sun screen 9. Present in the side walls of the upper element 24 are the ventilating openings 23, which allow air to pass through but which do not allow direct incidence into the interior of the vehicle, owing to the overhanging edge of the upper wall 28 of the upper element 24. The two elements 24 and 25, and of course opening 26 in sun screen 9, can be given any desired shape, as is illustrated in Fig. 18.

It will be apparent from the foregoing that the invention provides an open roof construction which provides adequate ventilating as well as good possibilities of being adapted to the interior of the vehicle.

The invention is not limited to the exemplary embodiments as described above and shown in the drawing, which can be varied in several ways without departing from the scope of the claims.

The invention is related to the following points:

## Claims

1. An open roof construction for a vehicle having an opening in its fixed roof (1), comprising a stationary part to be fixed to the roof, an adjustable upper closure element supported by said stationary part, which is adjustable between a closed position, in which it closes the roof opening (2), and an open position, in which it opens the roof opening (2) at least partially, as well as a lower closure element, in particular a sun screen (9) in the form of a slidable, substantially rigid screen, which is provided with at least one ventilating opening for passing air through the screen, wherein said screen comprises horizontally overlapping parts, at least adjacent to said ventilating opening, **characterized in that** the overlapping parts form a ventilating gap (16) covered from the upper side which ventilating gap (16) extends in the longitudinal direction with respect to the longitudinal axis of the open roof construction, which overlapping parts prevent direct incidence of light through the screen.

2. An open roof construction according to claim 1, wherein said screen comprises a central part (17) and two edge parts (18), which slightly overlap said central part on the upper side and wherein the overlapping parts of said central part hide the ventilating openings to be formed from view.

3. An open roof construction according to claim 1, wherein said screen comprises a central part (17) and two edge parts (18), wherein said central part overlaps the edge parts on an upper side thereof.

4. An open roof construction according to claim 2 or 3, wherein the two edge parts are interconnected at a front and rear edge of said screen.

5. An open roof construction according to claim 1, wherein two overlapping parts extend in the longitudinal direction and symmetrically with respect to the longitudinal axis of the open roof construction.

6. An open roof construction according to claim 3, wherein the overlapping parts are disposed near the side edges of the screen, and wherein the outer parts of the screen are furthermore adapted for guiding the screen.

7. A sun screen (9) for use in an open roof construction for a vehicle having an opening in its fixed roof (1), said screen being in the form of a slidable, substantially rigid screen comprising at least one ventilating opening for passing air through the screen (9), wherein said screen is formed with horizontally overlapping parts, at least adjacently to said ventilating opening, **characterized in that** the overlapping parts form a ventilating gap (16) covered from the upper side which ventilating gap (16) extends in the longitudinal direction with respect to the longitudinal axis of the open roof construction, which overlapping parts prevent direct incidence of light through the screen.

8. A sun screen (9) according to claim 7, wherein the upper side of the screen is substantially flat and free from any upward projections.

## Patentansprüche

1. Offendachkonstruktion für ein Fahrzeug, welches in seinem Festdach (1) eine Öffnung hat, aufweisend: ein stationäres Teil, das am Dach zu befestigen ist, ein verstellbares oberes Schließelement, das von dem stationären Teil gehalten ist und das zwischen einer Schließposition, in welcher es die Dachöffnung (2) schließt, und einer Öffnungsposition, in welcher es die Dachöffnung (2) zumindest teilweise öffnet, sowie ein unteres Schließelement, insbesondere eine Sonnenblende (9), in Form einer verschiebbaren, im wesentlichen steifen Blende, welche mit zumindest einer Ventilationsöffnung zum Durchlassen von Luft durch die Blende versehen ist, wobei die Blende zumindest benachbart zu der Ventilationsöffnung sich horizontal überlappende Teile hat, **dadurch gekennzeichnet, dass** die sich überlappenden Teile einen sich von der oberen Seite her abgedeckten Ventilationsspalt (16) bilden, welcher Ventilationsspalt (16) sich in Längsrichtung bezüglich der Längsachse der Offendachkonstruktion erstreckt und welche sich überlappenden Teile den direkten Einfall von Licht durch die Blende verhindern.

2. Offendachkonstruktion gemäß Anspruch 1, wobei die Blende ein zentrales Teil (17) und zwei Randteile (18) aufweist, welche das zentral Teil an der oberen Seite etwas überlappen und wobei die überlappenden Teile des zentralen Teils die zu bildenden Ventilationsöffnungen vor Blicken verdecken.

3. Offendachkonstruktion gemäß Anspruch 1, wobei die Blende ein zentrales Teil (17) und zwei Randteile (18) aufweist, wobei das zentrale Teil die Randteile an einer oberen Seite davon überlappt.

4. Offenfachkonstruktion gemäß Anspruch 2 oder 3, wobei die beiden Randteile an einem vorderen und einem hinteren Rand der Blende miteinander verbunden sind.

5. Offendachkonstruktion gemäß Anspruch 1, wobei die sich überlappenden Teile sich in Längsrichtung und symmetrisch bezüglich der Längsachse der Offendachkonstruktion erstrecken.

6. Offendachkonstruktion gemäß Anspruch 3, wobei die sich überlappenden Teile nahe der Seitenränder der Blende angeordnet sind, und wobei die äußeren Teile der Blende ferner eingereicht sind zum Führen der Blende.

7. Sonnenblende (9) zur Verwendung in einer Offendachkonstruktion (9) für eine Fahrzeug mit einer Öffnung in seinem Festdach (1), wobei die Blende in Form einer verschiebbaren, im Wesentlichen steifen Blende ist, aufweisend wenigstens eine Ventilationsöffnung zum Durchlassen von Luft durch die Blende (9), wobei die Blende zumindest benachbart zu der Ventilationsöffnung mit sich horizontal überlappenden Teilen ausgebildet ist, **dadurch gekennzeichnet, dass** die sich überlappenden Teile einen Ventilationspalt (16) bilden, der von der oberen Seite her abgedeckt ist, welcher Ventilationsspalt (16) sich in Längsrichtung bezüglich der Längsachse der Offendachkonstruktion erstreckt und welche sich überlappenden Teile einen direkten Einfall von Licht durch die Blende verhindern.

8. Sonnenblende (9) gemäß Anspruch 7, wobei die obere Seite der Blende im Wesentlichen flach ist und frei von nach oben weisenden Vorsprüngen ist.

## Revendications

1. Structure de toit ouvert pour un véhicule présentant une ouverture dans son toit fixe (1), comprenant une partie stationnaire conçue pour être fixée au toit, un élément d'obturation supérieur réglable, supporté par ladite partie stationnaire et pouvant être réglé entre une position fermée, dans laquelle il occulte l'ouverture (2) du toit, et une position ouverte dans laquelle il dégage au moins partiellement ladite ouverture (2) du toit, ainsi qu'un élément d'obturation inférieur, en particulier un écran solaire (9) revêtant la forme d'un écran coulissant substantiellement rigide, qui est muni d'au moins un orifice de ventilation dévolu à la circulation d'air à travers l'écran, sachant que ledit écran comprend des parties en chevauchement horizontal, au moins adjacentes audit orifice de ventilation, **caractérisée par le fait que** les parties en chevauchement forment un interstice de ventilation (16) recouvert depuis le côté supérieur, lequel interstice de ventilation (16) s'étend dans la direction longitudinale par rapport à l'axe longitudinal de ladite structure de toit ouvert, lesdites parties en chevauchement empêchant une incidence directe de lumière à travers l'écran.

2. Structure de toit ouvert selon la revendication 1, dans laquelle ledit écran comprend une partie centrale (17) et deux parties marginales (18) qui chevauchent légèrement ladite partie centrale sur le côté supérieur, et dans laquelle les parties en chevauchement de ladite partie centrale dissimulent à la vue les orifices de ventilation devant être pratiqués.

3. Structure de toit ouvert selon la revendication 1, dans laquelle ledit écran comprend une partie centrale (17) et deux parties marginales (18), ladite partie centrale chevauchant les parties marginales sur une face supérieure de ces dernières.

4. Structure de toit ouvert selon la revendication 2 ou 3, dans laquelle les deux parties marginales sont reliées l'une à l'autre sur des bords antérieur et postérieur dudit écran.

5. Structure de toit ouvert selon la revendication 1, dans laquelle deux parties en chevauchement s'étendent dans la direction longitudinale, et symétriquement par rapport à l'axe longitudinal de ladite structure de toit ouvert.

6. Structure de toit ouvert selon la revendication 3, dans laquelle les parties en chevauchement sont disposées à proximité des bords latéraux de l'écran, et dans laquelle les parties extérieures de l'écran sont conçues, en outre, pour guider ledit écran.

7. Ecran solaire (9) destiné à être utilisé dans une structure de toit ouvert pour un véhicule muni d'une ouverture dans son toit fixe (1), ledit écran revêtant la forme d'un écran coulissant substantiellement rigide, offrant au moins un orifice de ventilation dédié à la circulation d'air à travers l'écran (9), sachant que ledit écran comporte des parties en chevauchement horizontal, au moins adjacentes audit orifice de ventilation, **caractérisé par le fait que** les parties en chevauchement forment un interstice de ventilation (16) recouvert depuis le côté supérieur, lequel interstice de ventilation (16) s'étend dans la direction longitudinale par rapport à l'axe longitudinal de ladite structure de toit ouvert, lesdites parties en chevauchement empêchant une incidence directe de lumière à travers l'écran.

8. Ecran solaire (9) selon la revendication 7, dans lequel le côté supérieur dudit écran est essentiellement plat, et dépourvu de quelconques saillies vers le haut.
